# EUROPEAN PATENT APPLICATION

(11) **EP 4 691 690 A1**
(43) Date of publication of application: **11.02.2026**
(21) Application number: 24777611.5
(22) Date of filing: 29.02.2024
(51) Int. Cl.: B23Q 3/155

(54) **HORIZONTAL MACHINING MACHINE TOOL**

(30) Priority: 28.03.2023 CN 202310313994
(71) Applicant: Kede Numerical Control Co., Ltd., Dalian, Liaoning 116000 (CN)
(72) Inventor: CHEN, Hu, Dalian, Liaoning 116000 (CN); REN, Zhihui, Dalian, Liaoning 116000 (CN); YIN, Shuqiang, Dalian, Liaoning 116000 (CN); DU, Changlin, Dalian, Liaoning 116000 (CN); GONG, Xinglin, Dalian, Liaoning 116000 (CN); HE, Xingjian, Dalian, Liaoning 116000 (CN); WANG, Lianyang, Dalian, Liaoning 116000 (CN); BAO, Wenlu, Dalian, Liaoning 116000 (CN); WANG, Feng, Dalian, Liaoning 116000 (CN)
(74) Representative: JD&P Patent Attorneys Joanna Dargiewicz & Partners
(86) International application number: PCT/CN2024/079306
(87) International publication number: WO 2024/198821

(57) **Abstract**

A horizontal machine tool includes a B-axis rotary assembly (1), the B-axis rotary assembly (1) has a machining surface (2) and a tool magazine surface (3) oriented in different directions, the machining surface (2) and the tool magazine surface (3) are both parallel to a B-axis and configured to rotate simultaneously about the B-axis, a tool magazine (4) is provided on the tool magazine surface (3), an axis of a tool within the tool magazine (4) is perpendicular to the tool magazine surface (3), the machining surface (2) is provided with a worktable (5), and a rotational axis of the worktable (5) is perpendicular to the machining surface (2) . The worktable (5) and the tool magazine (4) share the B-axis for rotation. This design results in a compact machine configuration, which effectively reduces the installation space required for the equipment. The worktable (5) and the tool magazine (4) do not require separately provided drive devices, which, on one hand, saves the installation space for the drive devices, and on the other hand, avoids the possibility of motion interference that may occur when separate drive devices are provided. By sharing the B-axis, the worktable (5) and the tool magazine (4) can be driven to rotate simultaneously, which improves the convenience of controlling the worktable and the tool magazine, reduces manufacturing costs and operating costs, and enhances the workpiece machining efficiency.

## Description

### Technical Field

The present invention relates to the technical field of machine tools, and more particularly to a horizontal machine tool.

### Background Art

After a workpiece is clamped once on a machine tool, a numerical control system is capable of controlling the machine tool, in accordance with different machining processes, to automatically select and replace tools, automatically change the spindle rotation speed, feed speed, and the movement trajectory of a tool relative to a workpiece, as well as other auxiliary functions, so as to sequentially perform multiple machining operations on multiple surfaces of the workpiece. Horizontal machine tools offer advantages such as cost saving, reduced installation space, and high machining efficiency, and are therefore widely used in the machining industry.

In existing horizontal machine tools, a worktable and a tool magazine are arranged separately, resulting in a loosely configured machine structure and a large equipment footprint. Moreover, the worktable and the tool magazine require separate drive mechanisms for driving, which leads to a large installation space for the driving equipment. The separately arranged drive mechanisms also require separate control, thereby making the operation complicated, reducing the machining efficiency of the workpiece, and increasing the possibility of motion interference, ultimately resulting in increased manufacturing costs and operating costs, etc.

### Summary of Invention

The present invention provides a horizontal machine tool in order to overcome the above-described problems.

To achieve the above object, the technical solution of the present invention is as follows.

A horizontal machine tool includes: a B-axis rotary assembly, wherein the B-axis rotary assembly has a machining surface and a tool magazine surface oriented in different directions, the machining surface and the tool magazine surface are both parallel to a B-axis and configured to rotate simultaneously about the B-axis, a tool magazine is provided on the tool magazine surface, an axis of a tool within the tool magazine is perpendicular to the tool magazine surface, the machining surface is provided with a worktable, and a rotational axis of the worktable is perpendicular to the machining surface.

The horizontal machine tool further includes an A-axis rotary assembly, wherein the A-axis rotary assembly includes a plurality of spindles arranged in parallel to one another, a plurality of tool groups is provided on the tool magazine surface, the tool is provided in each of the tool groups, a plurality of the worktables is provided on the machining surface, and positions of the spindles, the tool groups, and the worktables correspond one-to-one.

Further, the tool group includes at least two tool holders, and opening directions of the two tool holders are opposite to each other.

Further, the plurality of spindles is arranged in a Y-axis direction, and axes of the spindles are parallel to an X-axis.

The horizontal machine tool further includes: a bed; a column; and a saddle, wherein the B-axis rotary assembly further includes a B-axis rotary table, the B-axis rotary table is provided on the bed and configured to move along an X-axis, the column is provided on the bed and configured to move along a Z-axis, the saddle is provided on the column and configured to move along a Y-axis; and the A-axis rotary assembly is provided on the saddle.

The horizontal machine tool further includes a B-axis support member, wherein the B-axis support member is configured to move along the X-axis, and the B-axis rotary table is provided on the B-axis support member.

Further, the B-axis support member includes a support portion, a mating portion disposed opposite to the support portion, and a connecting portion provided between the support portion and the mating portion,
the B-axis rotary assembly further includes a workpiece C-axis housing, the machining surface and the tool magazine surface are both provided on the workpiece C-axis housing, the B-axis rotary table is provided on the support portion, one end of the workpiece C-axis housing is mounted on the B-axis rotary table, another end of the workpiece C-axis housing is rotatably connected to the mating portion, and the workpiece C-axis housing is configured to rotate about the B-axis.

Further, the bed is provided with an auxiliary positioning portion, the auxiliary positioning portion is provided with an auxiliary guide rail, the bed is provided with an X-axis guide rail, the auxiliary guide rail is parallel to the X-axis guide rail, and is located at a different position on the Y-axis from the X-axis guide rail, the connecting portion is mounted on the auxiliary guide rail via a first slider, and the support portion is mounted on the X-axis guide rail via a second slider.

Further, a C-axis drive assembly configured to drive the worktable is provided within the workpiece C-axis housing.

Compared with conventional horizontal machine tools, the horizontal machine tool disclosed in the present invention provides the following advantageous effects.

In the horizontal machine tool disclosed in the present invention, the worktable and the tool magazine share the B-axis for rotation. This design results in a compact machine configuration, which can effectively reduce the installation space required for the equipment. Moreover, the worktable and the tool magazine do not require separately provided drive devices, thereby saving the installation space for the drive devices. At the same time, the worktable and the tool magazine can be driven to rotate simultaneously, greatly improving the convenience of controlling the worktable and the tool magazine. Furthermore, since the worktable and the tool magazine are driven by the same drive device, the possibility of motion interference that may occur when separate drive devices are provided is avoided. The shared use of the B-axis by the worktable and the tool magazine also contributes to reduced manufacturing costs and operating costs, while enhancing the workpiece machining efficiency.

### Brief Description of Drawings

In order to illustrate the examples of the present invention or the technical solutions in the prior art more clearly, the following briefly introduces the accompanying drawings that need to be used in the description of the examples or the prior art. Obviously, the accompanying drawings in the following description are some examples of the present invention, and for a person skilled in the art, other drawings can also be obtained from these accompanying drawings without creative effort.
Fig. 1 is a first perspective structural diagram of a horizontal machine tool disclosed in an example of the present invention.
Fig. 2 is a second perspective structural diagram of the horizontal machine tool disclosed in the example of the present invention.
Fig. 3 is a front view of the horizontal machine tool disclosed in the example of the present invention.

In the drawings: 1. B-axis rotary assembly; 2. Machining surface; 3. Tool magazine surface; 4. Tool magazine; 5. Worktable; 6. A-axis rotary assembly; 61. Spindle; 7. Tool group; 71. Tool holder; 8. Bed; 9. Column; 10. Saddle; 11. B-axis rotary table; 12. B-axis support member; 13. Support portion; 14. Mating portion; 15. Connecting portion; 16. Workpiece C-axis housing; 17. Auxiliary positioning portion; 18. Auxiliary guide rail; 19. X-axis guide rail; 20. First slider; 21. Second slider.

### Description of Embodiments

In order to make the purposes, technical solutions and advantages of the examples of the present invention clearer, the technical solutions in the examples of the present invention will be clearly and completely described below with reference to the accompanying drawings in the examples of the present invention. Obviously, the examples to be described are some, but not all, examples of the present invention. Based on the examples of the present invention, all other examples obtained by a person skilled in the art without creative efforts are within the protection scope of the present invention.

### Example:

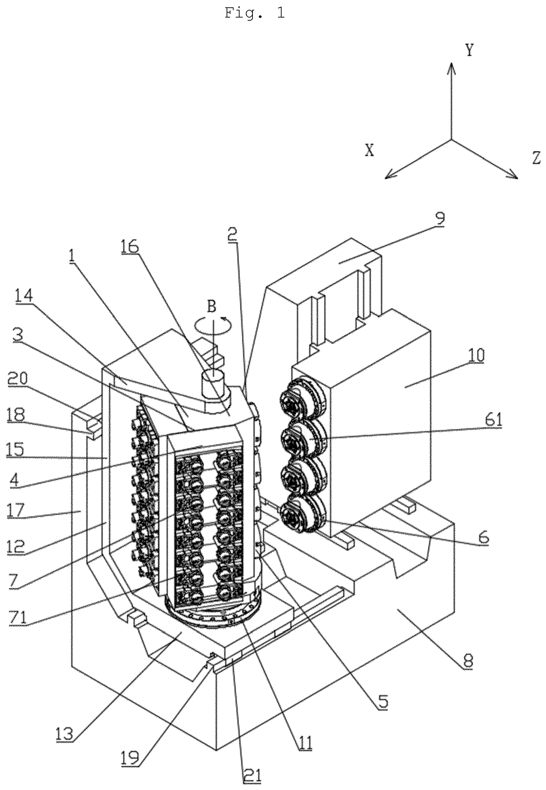

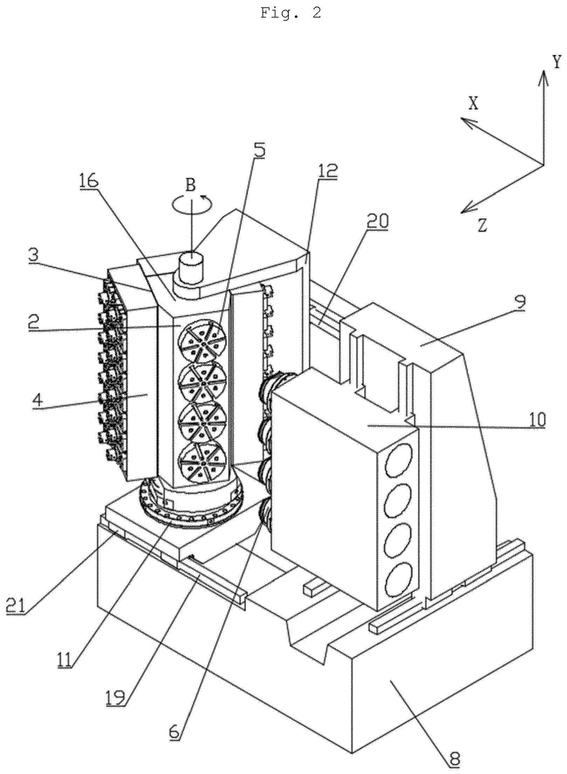

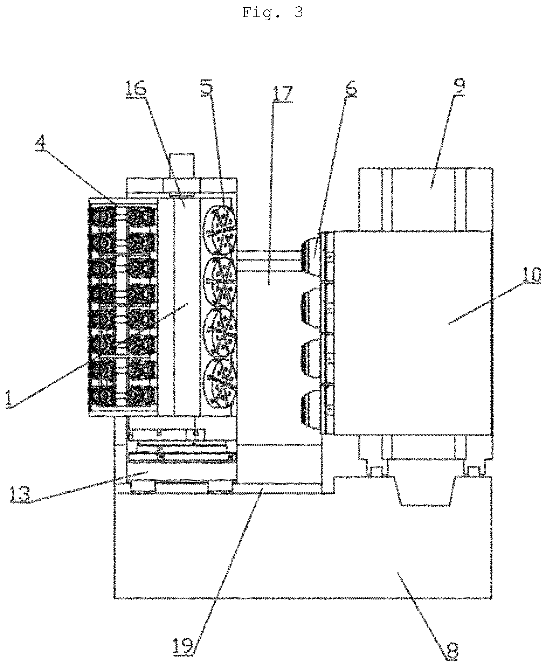

As illustrated in Figs. 1 to 3, a horizontal machine tool according to the present example includes: a B-axis rotary assembly 1, wherein the B-axis rotary assembly 1 has a machining surface 2 and a tool magazine surface 3 oriented in different directions, the machining surface 2 and the tool magazine surface 3 are both parallel to a B-axis and configured to rotate simultaneously about the B-axis, a tool magazine 4 is provided on the tool magazine surface 3, an axis of a tool within the tool magazine 4 is perpendicular to the tool magazine surface 3, the machining surface 2 is provided with a worktable 5, and a rotational axis of the worktable 5 is perpendicular to the machining surface 2.

Specifically, in the present example, the worktable 5 and the tool magazine 4 are both configured to freely rotate 360 degrees about the B-axis. The interference regions between the worktable 5, the tool magazine 4, and other components are small, providing high machining flexibility, thereby promoting improved production efficiency. The worktable 5 may be equipped with an automated tooling fixture, a tooling master plate, a tooling sub-plate, or an automated material handling mechanism, such as a robot or manipulator, so as to implement automated loading and unloading. The tool magazine 4 may be equipped with an automated tool changing mechanism, such as a robot or manipulator, and the automated tool changing mechanism and the automated material handling mechanism may share and reuse the same mechanism.

In the horizontal machine tool disclosed in the present invention, the worktable and the tool magazine share the B-axis for rotation. This design results in a compact machine configuration, which can effectively reduce the installation space required for the equipment. Moreover, the worktable and the tool magazine do not require separately provided drive devices, thereby saving the installation space for the drive devices. At the same time, the worktable and the tool magazine can be driven to rotate simultaneously, greatly improving the convenience of controlling the worktable and the tool magazine. Furthermore, since the worktable and the tool magazine are driven by the same drive device, the possibility of motion interference that may occur when separate drive devices are provided is avoided. The shared use of the B-axis by the worktable and the tool magazine also contributes to reduced manufacturing costs and operating costs, while enhancing the workpiece machining efficiency.

Preferably, as illustrated in Fig. 1, the horizontal machine tool further includes an A-axis rotary assembly 6, the A-axis rotary assembly 6 including a plurality of spindles 61 arranged in parallel to one another. A plurality of tool groups 7 is provided on the tool magazine surface 3, the tool is provided in each of the tool groups 7. A plurality of the worktables 5 is provided on the machining surface 2, and the positions of the spindles 61, the tool groups 7, and the worktables 5 correspond one-to-one. Such an arrangement facilitates cooperation between the spindles 61 and the tool groups 7 for performing tool picking and tool changing operations. With such an arrangement, after the spindle 61 picks up the tool, the tool can be used to machine a workpiece to be machined on the corresponding worktable 5. Thus, during tool picking and tool changing, the spindle 61 and the tool within the tool group 7 are ensured to be positioned in precise correspondence, thereby ensuring the positioning accuracy of the spindle 61 and the tool when the tool is picked up or changed from the tool group 7 by the spindle 61. Accordingly, the positional accuracy of the tool on the spindle 61 after the tool change can be ensured. The positional correspondence between the spindle 61 and the worktable 5 ensures the machining accuracy of the tool mounted on the spindle 61 with respect to the workpiece on the worktable 5, thus ensuring the machining quality of the workpiece to meet production requirements. By providing a plurality of spindles 61 and a plurality of tool groups 7, mass tool changing and tool picking operations can be performed, and a large number of workpieces can be machined simultaneously, thereby increasing the production volume per batch, improving batch production efficiency, and further enhancing economic benefits.

Preferably, the tool group 7 includes at least two tool holders 71, and opening directions of the two tool holders 71 are opposite to each other. The tool holders 71 are configured to clamp tool shanks so as to ensure the stability of the tool shanks and the tools mounted thereon, thereby facilitating cooperation with the spindle 61 to perform tool picking operations.

Preferably, as illustrated in Fig. 1, the plurality of spindles 61 is arranged in a Y-axis direction, and axes of the spindles 61 are parallel to an X-axis. By arranging the spindles 61 in the Y-axis direction, namely, the direction in which the B-axis is set for rotation, it becomes easier to align the positions of the spindles 61 with the tools within the tool groups 7, thereby enabling precise tool picking and tool changing operations. With precise tool picking and tool changing operations, the position of the tool on the spindle 61 can be highly accurate, which enhances the positioning precision of the tool tip of the tool relative to the workpiece and thereby allows high-precision machining of the workpiece by the tool.

Preferably, as illustrated in Figs. 1 to 3, the horizontal machine tool further includes a bed 8; a column 9; and a saddle 10, wherein the B-axis rotary assembly 1 further includes a B-axis rotary table 11, the B-axis rotary table 11 is provided on the bed 8 and configured to move along an X-axis, the column 9 is provided on the bed 8 and configured to move along a Z-axis, the saddle 10 is provided on the column 9 and configured to move along a Y-axis; and the A-axis rotary assembly 6 is provided on the saddle 10. In the present example, a bed guide rail arranged in the Z-axis direction is provided on the top of the bed 8. A column slider is provided at the bottom of the column 9, and the column 9 is mounted on the bed guide rail via the column slider and is slidable along the bed guide rail. A column guide rail arranged in the Y-axis direction is provided on a side wall of the column 9 adjacent to the saddle 10. A saddle slider is provided on the saddle 10, and the saddle 10 is mounted on the column 9 via the saddle slider and is slidable along the column guide rail. The cooperation of the column 9 with the bed 8 and the saddle 10 enables the spindle 61 provided on the saddle 10 to have its height adjusted relative to the bed 8 along the Y-axis, i.e., in the vertical direction, and also enables its position to be adjusted in the Z-axis direction to vary its distance from the worktable 5. The arrangement of the column 9 with the bed 8 and the saddle 10 improves the flexibility and convenience of adjusting the position of the spindle 61.

Preferably, the horizontal machine tool further includes a B-axis support member 12, wherein the B-axis support member 12 is configured to move along the X-axis, and the B-axis rotary table 11 is provided on the B-axis support member 12. In the present example, the B-axis support member 12 is connected to a ball screw drive mechanism, which is configured to drive the B-axis support member 12 to move along the X-axis, thereby enabling the B-axis rotary table 11 to be driven to move along the X-axis. As a result, the B-axis rotary assembly 1 can move along the X-axis, either approaching or moving away from the A-axis rotary assembly 6, thus adjusting the distance between the B-axis rotary assembly 1 and the A-axis rotary assembly 6. The provision of the B-axis support member 12 enhances the flexibility of adjusting the distance between the B-axis rotary assembly 1 and the A-axis rotary assembly 6.

Preferably, the B-axis support member 12 includes a support portion 13, a mating portion 14 disposed opposite to the support portion 13, and a connecting portion 15 provided between the support portion 13 and the mating portion 14,
the B-axis rotary assembly 1 further includes a workpiece C-axis housing 16, the machining surface 2 and the tool magazine surface 3 are both provided on the workpiece C-axis housing 16, the B-axis rotary table 11 is provided on the support portion 13, one end of the workpiece C-axis housing 16 is mounted on the B-axis rotary table 11, another end of the workpiece C-axis housing 16 is rotatably connected to the mating portion 14, and the workpiece C-axis housing 16 is configured to rotate about the B-axis. The workpiece C-axis housing 16 is of a polyhedral structure. In the present example, the workpiece C-axis housing 16 adopts a rectangular box structure, which includes four side surfaces. One surface serves as the machining surface 2, on which the worktable 5 is mounted, and each of the remaining three surfaces serves as the tool magazine surface 3, on which the tool magazine 4 is mounted. The mating portion 14 is configured to provide top support for the B-axis rotary assembly 1. The arrangement of the connecting portion 15 with the support portion 13 and the mating portion 14 not only enhances the structural rigidity of the B-axis rotary assembly 1 but also provides stable support for the rotation of the B-axis rotary assembly 1, thereby ensuring rotational stability of the B-axis rotary assembly 1.

Preferably, the bed 8 is provided with an auxiliary positioning portion 17, the auxiliary positioning portion 17 is provided with an auxiliary guide rail 18, the bed 8 is provided with an X-axis guide rail 19, the auxiliary guide rail 18 is parallel to the X-axis guide rail 19, and is located at a different position on the Y-axis from the X-axis guide rail 19, the connecting portion 15 is mounted on the auxiliary guide rail 18 via a first slider 20, and the support portion 13 is mounted on the X-axis guide rail 19 via a second slider 21. By providing the second slider 21 and the X-axis guide rail 19, the B-axis support member 12, that is, the workpiece C-axis housing 16, can be moved along the X-axis guide rail 19, thereby allowing adjustment of the distance between the worktable 5 and the A-axis rotary assembly 6 and the distance between the tool magazine 4 and the A-axis rotary assembly 6, which improves the convenience of adjusting the positional relationship of the worktable 5 and the tool magazine 4 with respect to the spindle 61. The cooperation among the auxiliary guide rail 18, the first slider 20, the X-axis guide rail 19, and the second slider 21 assists the movement of the B-axis support member 12 and the B-axis rotary assembly 1 along the X-axis guide rail 19.

Preferably, a C-axis drive assembly configured to drive the worktable 5 is provided within the workpiece C-axis housing 16. The C-axis drive assembly is capable of providing a driving force for the rotation of the worktable 5.

The specific working process of the horizontal machine tool disclosed in the present invention is as follows.

First, a workpiece to be machined is mounted on the worktable 5 by means of an automated tooling fixture. An external force drives the support portion 13 to slide along the X-axis guide rail 19, causing the B-axis rotary assembly 1 to slide along the X-axis guide rail 19, so as to move closer to or farther away from the A-axis rotary assembly 6, thereby adjusting the positional relationship between the B-axis rotary assembly 1 and the A-axis rotary assembly 6. Subsequently, the B-axis rotary table 11 is driven to rotate, thereby driving the workpiece C-axis housing 16 to rotate about the B-axis. As the workpiece C-axis housing 16 rotates, the tool magazine surface 3 provided thereon rotates accordingly, and thus, the tool magazine 4 rotates along with the tool magazine surface 3. The tool magazine 4 is rotated to a direction corresponding to the spindle 61 of the A-axis rotary assembly 6. Then, the position of the column 9 is adjusted in the Z-axis direction, and the position of the saddle 10 is adjusted in the Y-axis direction, so that the spindle 61 is adjusted to a position matching the tool in the tool magazine 4. The spindle 61 is then rotated to pick up the tool. The B-axis rotary table 11 and the workpiece C-axis housing 16 are thus again driven to rotate, rotating the worktable 5 to a direction facing the spindle 61. The positions of the column 9 and the saddle 10 are then adjusted, while simultaneously adjusting the position of the B-axis rotary assembly 1, so that the worktable 5 corresponds in position to the spindle 61. Finally, the C-axis drive assembly within the workpiece C-axis housing 16 drives the worktable 5 to rotate, and thus, the worktable 5 drives the workpiece to rotate. The tool mounted on the spindle 61 rotates about an A-axis to perform machining on the workpiece.

Finally, it should be noted that: the above examples are only used to illustrate the technical solutions of the present invention, but not to limit them; although the present invention has been described in detail with reference to the foregoing examples, a person skilled in the art should understand that: the technical solutions described in the foregoing examples can still be modified, or some or all of the technical features thereof can be equivalently substituted. However, these modifications or substitutions do not make the essence of the corresponding technical solutions deviate from the scope of the technical solutions of the examples of the present invention.

## Claims

1. A horizontal machine tool comprising:
a B-axis rotary assembly (1), wherein
the B-axis rotary assembly (1) has a machining surface (2) and a tool magazine surface (3) oriented in different directions, the machining surface (2) and the tool magazine surface (3) are both parallel to a B-axis and configured to rotate simultaneously about the B-axis, a tool magazine (4) is provided on the tool magazine surface (3), an axis of a tool within the tool magazine (4) is perpendicular to the tool magazine surface (3), the machining surface (2) is provided with a worktable (5), and a rotational axis of the worktable (5) is perpendicular to the machining surface (2).

2. The horizontal machine tool according to claim 1, further comprising:
an A-axis rotary assembly (6), wherein
the A-axis rotary assembly (6) includes a plurality of spindles (61) arranged in parallel to one another, a plurality of tool groups (7) is provided on the tool magazine surface (3), the tool is provided in each of the tool groups (7), a plurality of the worktables (5) is provided on the machining surface (2), and positions of the spindles (61), the tool groups (7), and the worktables (5) correspond one-to-one.

3. The horizontal machine tool according to claim 2, wherein
the tool group (7) includes at least two tool holders (71), and opening directions of the two tool holders (71) are opposite to each other.

4. The horizontal machine tool according to claim 2, wherein
the plurality of spindles (61) is arranged in a Y-axis direction, and axes of the spindles (61) are parallel to an X-axis.

5. The horizontal machine tool according to claim 1, further comprising:
a bed (8);
a column (9); and
a saddle (10), wherein
the B-axis rotary assembly (1) further includes a B-axis rotary table (11), the B-axis rotary table (11) is provided on the bed (8) and configured to move along an X-axis, the column (9) is provided on the bed (8) and configured to move along a Z-axis, the saddle (10) is provided on the column (9) and configured to move along a Y-axis; and the A-axis rotary assembly (6) is provided on the saddle (10).

6. The horizontal machine tool according to claim 5, further comprising:
a B-axis support member (12), wherein
the B-axis support member (12) is configured to move along the X-axis, and the B-axis rotary table (11) is provided on the B-axis support member (12).

7. The horizontal machine tool according to claim 6, wherein
the B-axis support member (12) includes a support portion (13), a mating portion (14) disposed opposite to the support portion (13), and a connecting portion (15) provided between the support portion (13) and the mating portion (14),
the B-axis rotary assembly (1) further includes a workpiece C-axis housing (16), the machining surface (2) and the tool magazine surface (3) are both provided on the workpiece C-axis housing (16), the B-axis rotary table (11) is provided on the support portion (13), one end of the workpiece C-axis housing (16) is mounted on the B-axis rotary table (11), another end of the workpiece C-axis housing (16) is rotatably connected to the mating portion (14), and the workpiece C-axis housing (16) is configured to rotate about the B-axis.

8. The horizontal machine tool according to claim 7, wherein
the bed (8) is provided with an auxiliary positioning portion (17), the auxiliary positioning portion (17) is provided with an auxiliary guide rail (18), the bed (8) is provided with an X-axis guide rail (19), the auxiliary guide rail (18) is parallel to the X-axis guide rail (19), and is located at a different position on the Y-axis from the X-axis guide rail (19), the connecting portion (15) is mounted on the auxiliary guide rail (18) via a first slider (20), and the support portion (13) is mounted on the X-axis guide rail (19) via a second slider (21).

9. The horizontal machine tool according to claim 7, wherein a C-axis drive assembly configured to drive the worktable (5)
is provided within the workpiece C-axis housing (16).
